**Europäisches Patentamt**

(19) **European Patent Office**

**Office européen des brevets**

(11) Publication number : **0 325 290 B1**

(12) **EUROPEAN PATENT SPECIFICATION**

(45) Date of publication of patent specification :
04.03.92 Bulletin 92/10

(51) Int. Cl.⁵ : **B60K 28/16**

(21) Application number : **89101004.3**

(22) Date of filing : **20.01.89**

(54) **Traction control system for motor vehicles.**

(30) Priority : **22.01.88 JP 10835/88**

(43) Date of publication of application :
**26.07.89 Bulletin 89/30**

(45) Publication of the grant of the patent :
**04.03.92 Bulletin 92/10**

(84) Designated Contracting States :
**DE ES FR GB**

(56) References cited :
**EP-A- 0 182 020
DE-A- 3 430 982
DE-A- 3 546 575
DE-C- 3 728 574
US-A- 4 682 667
PATENT ABSTRACTS OF JAPAN vol. 11, no.
78 (M-570)(2525) 10 March 1987, & JP-A-61
235229 (MAZDA) 20 October 1986,**

(73) Proprietor : **AKEBONO BRAKE INDUSTRY
CO., LTD.
19-5, Koami-cho, Nihonbashi
Chuo-ku Tokyo (JP)**

(72) Inventor : **Hagiya, Naoyuki
4-10-9, Midorioka
Ageo-shi Saitama-ken (JP)**

(74) Representative : **Lehmann, Klaus, Dipl.-Ing. et
al
Schroeter, Fleuchaus, Lehmann, Wehser,
Holzer & Gallo Patentanwälte Wolfratshauser
Strasse 145
W-8000 München 71 (DE)**

## Description

Field of the Invention

This invention relates to a traction control system for motor vehicles, and more particularly it pertains to improvements in such a system adapted for a road surface having an extremely low friction coefficient or an uphill road surface having a low friction coefficient.

Description of the Prior Art:

Known in the art is a traction control system for motor vehicles, which is arranged, when the motor vehicle runs on a low-friction road surface such as a frozen, snow-covered or muddy one, to prevent a slip of driving wheel which tends to be caused in an attempt to start or accelerate the motor vehicle, thereby enhancing the starting/accelerating performance as well as the running stability of the vehicle. In such a control system, driving and non-driving wheel speeds are compared with each other; and when the former becomes higher than the latter by a predetermined amount, the driving wheel is judged as slipping, and thereupon engine throttle opening degree is reduced to decrease engine output so that the slip of the driving wheel is restrained, as disclosed in British Patent Publication No. 2,130,757 and EP-A-0 182 020 for example.

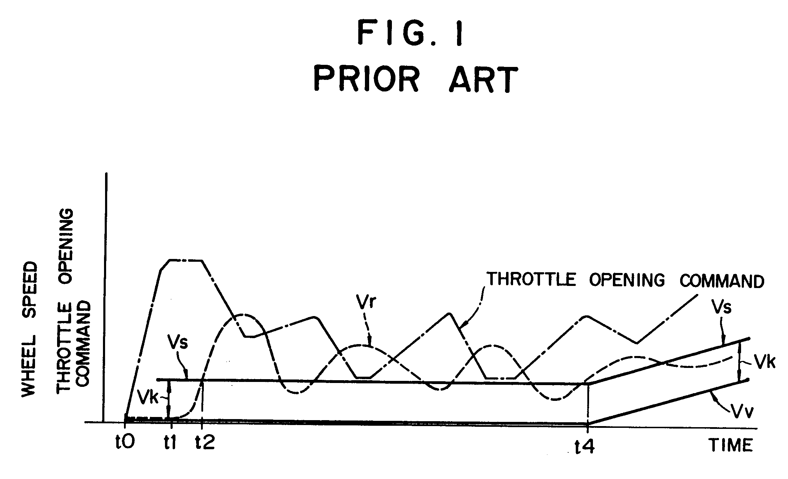

More specifically, with the foregoing traction control system, throttle opening/closing control is effected by using, as control threshold value for the driving wheel speed, a value Vs provided by adding a predetermined value Vk to non-driving wheel speed Vv which is equal to the vehicle speed, as shown in Figure 1, for example. In Figure 1, accelerator pedal is depressed at time t0 so that the throttle opening degree is increased and as a result, driving wheel speed Vr occurs at time t1; if the increase in the throttle opening degree is excessive, the driving wheel is caused to slip and thus traction control is commenced at time t2 when the driving wheel speed exceeds the above-mentioned control threshold value Vs, for example, so that the throttle opening degree is decreased; and thereafter, the throttle opening/closing control is performed such that the driving wheel speed Vr approaches the control threshold value Vs through comparison of the driving wheel speed Vr and the control threshold value Vs. In this way, the throttle closing control is effected at a predetermined closing speed whenever the driving wheel speed Vr exceeds the control threshold value Vs, whereas the throttle opening control is effected at a predetermined opening speed whenever the driving wheel speed reaches a high peak where it changes from increase to decrease.

However, the foregoing conventional traction control system has the following drawbacks in that even when the motor vehicle starts on a road surface having an extremely low friction coefficient (referred to as extremely low-$\mu$ hereinafter or an uphill road surface having a low friction coefficient (referred to as low-$\mu$ hereinafter), the above-described type of traction control is effected in a control mode similar to that that is used when the motor vehicle starts on a normal road surface instead of an extremely low-$\mu$ road surface or a low-$\mu$ uphill road surface: The control threshold value Vs for driving wheel speed Vr and the opening/closing speed for throttle opening/closing control for the cases where the motor vehicle starts on an extremely low-$\mu$ road surface or a low-$\mu$ uphill road surface, are set up to be those suitable for the cases where the motor vehicle starts on a normal road surface. Thus there is a tendency that throttle command value is too greatly and sharply increased and decreased so that an excessive slip of the driving wheel speed Vr occurs in frequent repetition; difficulty is experienced in an attempt to rapidly constrain the driving wheel in such an optimum slipping state that the driving wheel speed Vr properly exceeds the non-driving wheel speed Vv; and consequently a long time is taken before the non-driving wheel speed Vv occurs, and even if the traction control is commenced at the time t2, the motor vehicle is unable to move until time t4.

## SUMMARY OF THE INVENTION

Accordingly, it is an object of the present invention to provide a novel and improved traction control system for motor vehicles, which is adapted, when it is detected that the motor vehicle starts or accelerates on an extremely low-$\mu$ road surface or low-$\mu$ uphill road surface, the control mode of the system is switched to a gentler one which is suitable for the friction coefficient of such a road surface, thereby making it possible to easily constrain driving wheel to be in an optimum slipping state even when the motor vehicle starts or accelerates on an extremely low-$\mu$ road surface or low-$\mu$ uphill road surface.

In the traction control system embodying the present invention, it is monitored whether non-driving wheel speed occurs during the time interval from a point when traction control is started to a time point when a predetermined time period elapses therefrom; and in case a condition that non-driving wheel speed is not generated is detected during the above time interval, the throttle opening degree command value prevailing at the end of the foregoing time interval is decreased down to a predetermined lower limit value in response thereto, while at the same time the control is changed to a low-$\mu$ control mode.

As will be appreciated from the foregoing discussion, according to the present invention, when no occurrence of non-driving wheel speed is detected during the time interval from a time point when traction control is commenced to a time point when a predetermined time period elapses therefrom, the road surface on which the motor vehicle starts or is running, is judged as an extremely low-μ road surface or a low-μ uphill road surface; and when such judgement is made, the control mode of the traction control system is automatically switched to a gentler one suitable for the friction coefficient of such as an extremely low-μ road surface or a low-μ uphill road surface, whereby the driving wheel is restrained from excessively slipping so as to be rapidly brought into an optimum slipping state even when the motor vehicle starts or runs on an extremely low-μ road surface or a low-μ uphill road surface.

## BRIEF DESCRIPTION OF THE DRAWINGS

Figure 1 is a timing chart useful for explaining a conventional traction control system.

Figure 2 is a block diagram showing the the traction control system according to an embodiment of the present invention.

Figure 3 is a timing chart useful for explaining the traction control system of the present invention shown in Figure 2.

Figure 4 is is a flow chart useful for explaining the operation of the embodiment of the present invention.

## DESCRIPTION OF THE PREFERRED EMBODIMENTS

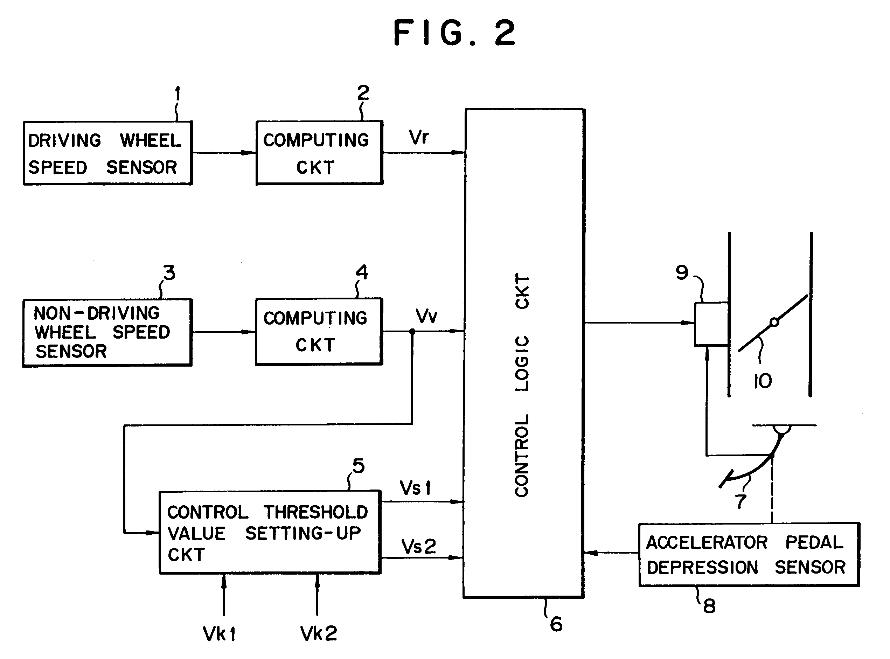

Referring to Figure 2, there is shown, in a block diagram, the arrangement of a microcomputer-based traction control system which is applicable to implement the present invention, wherein driving wheel speed is detected as a frequency signal by a driving wheel speed sensor 1; and the frequency signal is passed to a computing circuit 2 in which driving wheel speed Vr is computed on the basis of the frequency signal.

Non-driving wheel speed is also detected by a non-driving wheel speed sensor 3 as a frequency signal which in turn is passed to a computing circuit 4 in which non-driving wheel speed Vv is computed on the basis of the frequency signal. For a four-wheeled vehicle, for example, the non-driving wheel speed Vv may be computed to represent the higher one of lefthand and righthand non-driving wheel speeds, for example.

The non-driving wheel speed Vv is provided to a control threshold value setting-up circuit 5 in which predetermined values Vk1 and Vk2 (where Vk1 > Vk2) are added to the non-driving wheel speed Vv to set up a control threshold value Vs1 for the driving wheel speed in the normal control mode and a control threshold value Vs2 for the driving wheel speed in low-μ control mode. The driving wheel speed Vr, non-driving wheel speed Vv, and the control threshold values Vs1 and Vs2 are inputted to a control logic circuit 6 to which is also inputted the output of a sensor 8 which represents the extent of depression of accelerator pedal 7.

In response to these input signals, the control logic circuit 6 operates to drive a throttle driving mechanism 9 so that opening/closing control of a throttle valve 10 is effected so as to control engine output when the motor vehicle starts or accelerates.

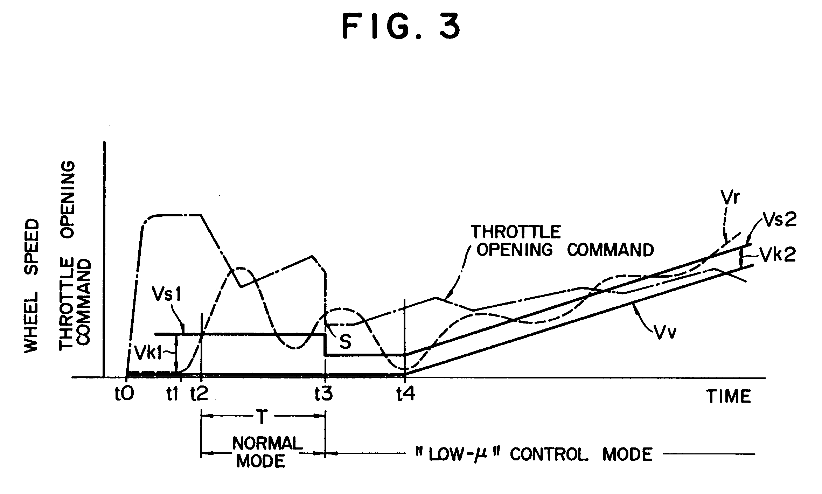

Figure 3 is a timing chart useful for explaining traction control performed in accordance with an embodiment of the present invention. In this embodiment, time T for judging an extremely low-μ road surface or a low-μ uphill road surface is preset to be say one second; counting-up by a timer starts at a time point t2 when driving wheel speed Vr exceeds a threshold value Vs1 and traction control is commenced; and thereafter, the traction control is switched from normal mode to a mode for low-μ road surface (referred to as "low-μ control mode" hereinafter) at a time point t3 when the above judging time T has elapsed while a non-driving speed Vv remains nil, so that control command values are changed as follows:

1) The throttle opening degree at the time point t3 is reduced to a value S for providing a minimum torque output of the engine, and the traction control is restarted by using this value S as an initial value for the low-μ control mode.

2) The control threshold value for the driving wheel speed is set to be a value Vs2 (= Vv + Vk2) which is smaller by a predetermined value than the control threshold value Vs1 for the normal mode (where Vk2 < Vk1).

3) The throttle opening/closing speed in the throttle opening degree control is set to be lower than that in the normal mode.

In this way, the traction control is effected in the control mode suitable for an extremely low-μ road surface or a low-μ uphill road surface, so that the time interval from the time point t2 when the traction control is commenced to a time point t4 when the non-driving wheel speed Vv occurs.

The traction control may be switched from the above low-μ control mode to the normal control mode either when the acceleration of the non-driving wheel speed Vv exceeds a predetermined value or when accelerator pedal remains non-depressed longer than a predetermined time. Thus, even when the motor vehicle stops temporarily during the low-μ control mode, the traction control can be restarted in the low-μ control mode if the time for which the accelerator pedal remains non-depressed is shorter than the predetermined time.

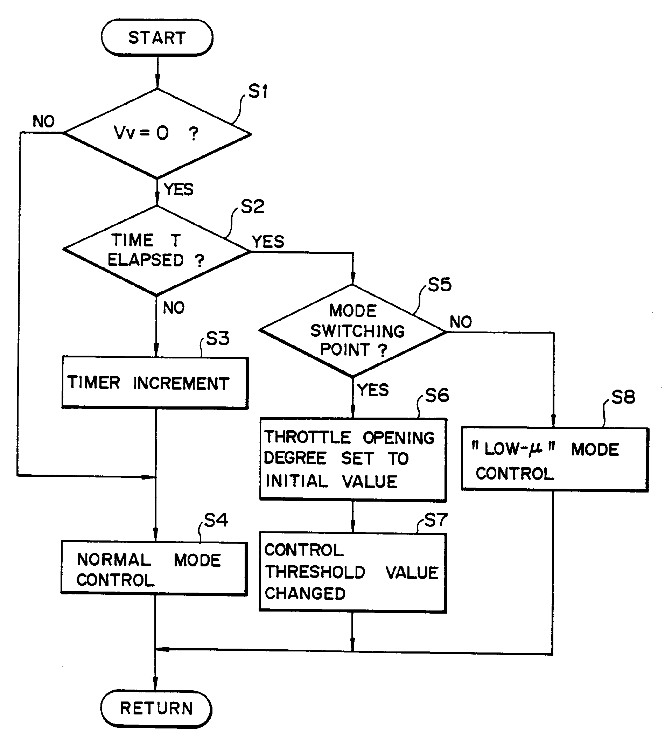

Figure 4 is a flow chart useful for explaining this embodiment, which will be described with reference to Figure 3.

First, counting-up by the timer starts at the time point t2 when the traction control is commenced. At step S1, judgement is made as to whether the non-driving wheel speed Vv is being generated. If the non-driving wheel speed Vv is not being generated, namely, if the result of the judgement at step S1 is "YES", then the control procedure proceeds to steps S2. At the step S2, where judgement is made as to whether the present time for judging an extremely low-μ road surface or a low-μ uphill road surface has elapsed from the time point t2 when the traction control was commenced. When the judging time T has not yet elapsed, the control procedure proceeds to step S3. At the step S3, an increment is applied to the timer count, and at step S4, the traction control is performed in the normal control mode.

At the time point t3 (Figure 3) when the judging time T has elapsed from the time point t2, the result of the judgement at the step S2 is "YES", and then the control procedure proceeds to step S5. At the step S5, judgement is made as to whether a mode switching point is reached. The time point t3 when the above judging time T has elapsed from the time point t2 when the traction control was commenced, turns out to be the above mode switching point. Thus, at the time point t3, the result of the judgment at the step S5 is "YES", and the control procedure proceeds to steps S6. At the step S6, the throttle opening degree command value prevailing at that time is reduced to a predetermined opening degree value S, and this value is used as an initial value for the subsequent control. Further, at step S7, the control threshold value for the driving wheel speed is switched and set to be a value Vs2 which is less than the threshold value Vs1 for the normal control mode.

After the time point t3, i.e., mode switching point, the result of the judgement at the step S5 is "NO", and the control procedure proceeds to step S8, so that the control is performed in the low-μ control mode in which the throttle opening/closing speed is made to be lower than that before the time point t3 is reached.

As explained above, in accordance with this embodiment, the timer is operated at the time point t2 when the traction control is commenced; it is judged that the road surface on which the motor vehicle starts or accelerates is an extremely low-μ road surface or a low-μ uphill road surface in the case where the non-driving wheel speed Vv is not generated (i.e., in the case where the motor vehicle cannot start) even when a predetermined time which is preset to say one second has elapsed; thereupon, the control mode is switched to the low-μ control mode suitable for the extremely low-μ road surface/low-μ uphill road surface; and thus even for an extremely low-μ road surface/low-μ uphill road surface, it is possible to restrain an excessive slip of driving wheel and rapidly constrain the driving wheel to be in an optimum slipping state, thereby greatly improving the starting/accelerating performance of the motor vehicle.

Although in the foregoing embodiment, description has been made of the case where the threshold value Vs1 is switched to value Vs2 at the time point 3, and thereafter the throttle opening/closing speed is made to be lower than that for the normal control mode, it is also possible that the throttle opening/closing speed may simply be made to be lower than that for the normal control mode without effecting the above-mentioned threshold value switching.

While the present invention has been illustrated and described with respect to some specific embodiments thereof, it is to be understood that the present invention is by no means limited thereto but encompasses all changes and modifications which will become possible within the scope of the appended claims.

## Claims

1. A traction control system for motor vehicles, comprising
a driving mechanism (9) that controls a throttle valve (10) to control engine output,
a threshold circuit (5) that sets up a first threshold value (Vs1) and a second threshold value (Vs2) dependent on a non-driving wheel speed (Vv),
a logic circuit (6) that controls the driving mechanism (9) and operates the driving mechanism (9) in a normal mode, wherein the engine output is reduced when the driving wheel speed (Vr) is higher than the first threshold value (Vs1), **characterized in** that the logic circuit (6) is switchable into a low-μ control mode, wherein the engine output is reduced, when the driving wheel speed (Vr) is less than the second threshold value (Vs2), and the logic circuit (6) comprises
   – timing means (S2,S3) that determine the time period for reduction of engine output and produce a signal when this time period is equal to or more than a predetermined time value,
   – and mode switching means (S5) that change the mode of the logic circuit (6) upon the said signal into the low-μ control mode.

2. A traction control system according to claim 1, **characterized in**
   – that it comprises a non-driving wheel speed sensor (3) and a computing circuit (4) to determine a non-driving wheel speed (Vv) value,
   – that the threshold circuit (5) comprises summing circuits that generate output signals for the first threshold value (Vs1) and the second threshold value (Vs2) by adding predetermined values (Vk) to the non-driving wheel speed (Vv) value.

3. A traction control system according to claim 1, **characterized in,**
that the driving mechanism (9) generates signals for performing throttle (10) closing and opening control, wherein throttle closing control is performed from a time point when the increasing driving wheel speed (Vr) exceeds the control threshold value (Vs1, Vs2), and throttle opening control is performed from a time point when a high peak of the driving wheel speed (Vr) occurs where the driving wheel speed (Vr) is changed from increase to decrease.

4. A traction control system according to claim 1, **characterized in** that the speed of throttle valve (10) opening /closing for the low-μ control mode is made to be lower than that for the normal control mode.

5. A traction control system according to claim 2, **characterized in** that the second threshold value (Vs2) is lower than the first threshold value (Vs1).

6. A traction control system according to claim 1, **characterized in** that the logic circuit (6) is returned from low-μ control mode to normal mode when an acceleration of the non-driving wheel exceeds a predetermined value during the low-μ contol mode.

7. A traction control system according to claim 1, **characterized in** that the logic circuit (6) is returned from the low-μ control mode to the normal mode, when a condition that an accelerator pedal (7) is not depressed persists longer than a predetermined period of time during the low-μ control mode.

8. A traction control system according to claim 1, **characterized in** that the predetermined value for the time period is 1 sec.

## Patentansprüche

1. Traktions-Steuerungssystem für Motorfahrzeuge, das einen Antriebsmechanismus (9) aufweist, der ein Drosselventil (10) steuert, um die Leistungsabgabe des Motors zu steuern,
einen Schwellenwert-Schaltkreis (5), der einen ersten Schwellenwert (Vs1) und einen zweiten Schwellenwert (Vs2) erzeugt, abhängig von einer Geschwindigkeit (Vv) eines Nicht-Antriebsrads,
einen logischen Schaltkreis (6), der den Antriebsmechanismus (9) steuert und den Antriebsmechanismus (9) in einem normalen Modus betreibt, in dem die Motor-Leistungsabgabe reduziert wird, wenn die Geschwindigkeit (Vr) des Antriebsrads größer ist als der erste Schwellenwert (Vs1), dadurch **gekennzeichnet,**
daß der logische Schaltkreis (6) in einen Nieder-μ-Steuerungsmodus umschaltbar ist, in dem die Motorleistungsabgabe reduziert wird, wenn die Geschwindigkeit (Vr) des Antriebsrads geringer ist als der zweite Schwellenwert (Vs2), und daß der logische Schaltkreis (6) folgende Merkmale aufweist:

– Zeitsteuereinrichtungen (S2, S3), die die Zeitspanne für die Reduzierung der Motor-Leistungsabgabe bestimmen und ein Signal erzeugen, wenn diese Zeitspanne gleich mit oder größer als ein vorbestimmter Zeitwert ist, und

– Modus-Umschalteinrichtungen (S5), die den Modus des logischen Schaltkreises (6) aufgrund des Signals in den Nieder-μ-Steuerungsmodus ändern.

2. Traktions-Steuerungssystem nach Anspruch 1, dadurch **gekennzeichnet,**
– daß es einen Geschwindigkeitssensor (3) für das Nicht-Antriebsrad und einen Berechnungs-Schaltkreis (4) aufweist, um einen Wert der Geschwindigkeit (Vv) des Nicht-Antriebsrads zu bestimmen,
– daß der Schwellenwertschaltkreis (5) Summierungs-Schaltkreise aufweist, die Ausgangssignale für den ersten Schwellenwert (Vs1) und den zweiten Schwellenwert (Vs2) erzeugen, indem sie vorgegebene Werte (Vk) zu dem Wert der Geschwindigkeit (Vv) des Nicht-Antriebsrads addieren.

3. Traktions-Steuerungssystem nach Anspruch 1, dadurch **gekennzeichnet,** daß der Antriebsmechanismus (9) Signale zum Durchführen der Steuerung des Schließens und des Öffnens der Drossel (10) erzeugt, wobei die Steuerung des Schließens der Drossel von einem Zeitpunkt an durchgeführt wird, an dem die zunehmende Geschwindigkeit (Vr) des Antriebsrads den Steuerungs-Schwellenwert (Vs1, Vs2) übersteigt, und wobei die Steuerung der Öffnung der Drossel von einem Zeitpunkt an durchgeführt wird, an dem ein Spitzenwert der Geschwindigkeit (Vr) des Antriebsrads auftritt, an dem die Geschwindigkeit (Vr) des Antriebsrads vom Zunehmen zum Abnehmen geändert wird.

4. Traktions-Steuerungssystem nach Anspruch 1, dadurch **gekennzeichnet,** daß die Geschwindigkeit des Öffnens/Schließens des Drosselventils (10) für den Nieder-μ-Steuerungsmodus derart ausgelegt ist, daß sie niedriger ist, als diejenige für den normalen Steuerungsmodus.

5. Traktions-Steuerungssystem nach Anspruch 2, dadurch **gekennzeichnet,** daß der zweite Schwellenwert (Vs2) niedriger ist als der erste Schwellenwert (Vs1).

6. Traktions-Steuerungssystem nach Anspruch 1, dadurch **gekennzeichnet,** daß der logische Schaltkreis (6) von dem Nieder-μ-Steuerungsmodus in den normalen Modus zurückgesetzt wird, wenn eine Beschleunigung des Nicht-Antriebsrads einen vorbestimmte Wert während des Nieder-μ-Steuerungsmodus überschreitet.

7. Traktions-Steuerungssystem nach Anspruch 1, dadurch **gekennzeichnet,** daß der logische Schaltkreis (6) von dem Nieder-μ-Steuerungsmodus in den normalen Modus zurückgesetzt wird, wenn ein Zustand, in dem ein Beschleunigungspedal (7) nicht heruntergedrückt ist, länger anhält als eine vorbestimmte Zeitspanne während des Nieder-μ-Steuerungsmodus.

8. Traktions-Steuerungssystem nach Anspruch 1, dadurch **gekennzeichnet**, daß der vorbestimmte Wert für die Zeitspanne 1 Sekunde ist.

## Revendications

1. Système de commande de traction pour véhicules à moteur, comportant un mécanisme d'entraînement (9) qui commande un papillon (10) pour régler la puissance du moteur,
un circuit à valeur de seuil (5) qui établit une première valeur de seuil (Vs1) et une deuxième valeur de seuil (Vs2) en fonction d'une vitesse (Vv) de roue non-motrice,
un circuit logique (6) qui commande le mécanisme d'entraînement (9) et actionne le mécanisme d'entraînement (9) dans un mode normal, dans lequel la puissance du moteur est réduite lorsque la vitesse (Vr) de roue motrice est supérieure à la première valeur de seuil (Vs1), **caractérisé en ce que**
le circuit logique (6) est commutable en mode low-$\mu$, dans lequel la puissance du moteur est réduite lorsque la vitesse (Vr) de la roue motrice est inférieure à la deuxième valeur de seuil (Vs2), et que le circuit logique (6) comporte

– des moyens de réglage temporisé (S2, S3) qui déterminent la période de temps pour la réduction de la puissance du moteur et produisent un signal lorsque la période est égale ou supérieure à une valeur de temps prédéterminée,
– et des moyens de commutation (S5) qui changent le mode du circuit logique (6) à la suite dudit signal en mode de commande low-$\mu$.

2. Système de commande de traction selon la revendication 1, caractérisé en

– ce qu'il comporte un capteur (3) de vitesse de roue non-motrice et un circuit de calcul (4) pour déterminer une valeur de vitesse (Vv) de roue non-motrice,
– que le circuit de valeur de seuil (5) comporte des circuits d'addition qui génèrent des signaux de sortie pour la première valeur de seuil (Vs1) et la deuxième valeur de seuil (Vs2) par l'addition de valeurs prédéterminées (Vk) à la valeur de vitesse (Vv) de la rour non-motrice.

3. Système de commande de traction selon la revendication 1, caractérisé en ce que le mécanisme d'entraînement (9) génère des signaux pour réaliser la commande de fermeture et d'ouverture du papillon (10), dans lequel la commande de la fermeture du papillon est exécutée à partir d'un instant où la vitesse (Vr) croissante de la roue motrice dépasse la valeur de seuil de commande (Vs1, Vs2), et dans lequel la commande de l'ouverture du papillon est exécutée à partir d'un instant où la pointe de vitesse (Vr) de la roue motrice se produit d'un instant où la vitesse de la roue motrice (Vr) commute d'augmentation en diminution.

4. Système de commande de traction selon la revendication 1, caractérisé en ce que la vitesse d'ouverture/de fermeture du papillon (10) pour le mode de commande low-$\mu$ est conçue pour être abaissée par rapport à celle du mode de commande normal.

5. Système de commande de traction selon la revendication 2, caractérisé en ce que la deuxième valeur de seuil (Vs2) est inférieure à la première valeur de seuil (Vs1).

6. Système de commande de traction selon la revendication 1, caractérisé en ce que le circuit logique (6) retourne du mode de commande low-$\mu$ au mode normal lorsqu'une accélération de la roue non-motrice dépasse une valeur prédéterminée pendant que la commande est en mode low-$\mu$.

7. Système de commande de traction selon la revendication 1, caractérisé en ce que le circuit logique (6) retourne du mode de commande low-$\mu$ au mode normal lorsqu'une condition dans laquelle une pédale de l'accélérateur (7) n'est pas enfoncée, persiste plus longtemps qu'une période de temps prédéterminée pendant que la commande est en mode low-$\mu$.

8. Système de commande de traction selon la revendication 1, caractérisé en ce que la valeur prédéterminée pour la période de temps est d'une seconde.

# FIG. I
## PRIOR ART

# FIG. 2

FIG. 3

# FIG. 4

```
                    ┌──────────┐
                    │  START   │
                    └──────────┘
                         │
                         ▼
NO                    ╱S1╲
◄──────────────┤  Vv = 0  ?  ├
               │    ╲    ╱
               │     │YES
               │     ▼
               │      ╱S2╲                    ╱S5╲
               │  ╱ TIME T ╲  YES        ╱  MODE   ╲  NO
               │ ╱ ELAPSED ? ╲──────────► SWITCHING  ───────┐
               │  ╲         ╱            ╲  POINT ? ╱        │
               │   ╲   ╱                  ╲       ╱          │
               │    │NO                      │YES           │
               │    ▼     ╱S3                ▼   ╱S6         ▼   ╱S8
               │  ┌──────────────┐      ┌──────────────┐  ┌──────────────┐
               │  │TIMER INCREMENT│      │THROTTLE OPENING│ │"LOW-μ" MODE  │
               │  └──────────────┘      │DEGREE SET TO   │ │CONTROL       │
               │         │              │INITIAL VALUE   │ └──────────────┘
               └─────────┤              └──────────────┘        │
                         │                     │                │
                         ▼    ╱S4               ▼   ╱S7          │
                  ┌──────────────┐        ┌──────────────┐       │
                  │NORMAL  MODE  │        │CONTROL       │       │
                  │CONTROL       │        │THRESHOLD VALUE│      │
                  └──────────────┘        │CHANGED       │       │
                         │                └──────────────┘       │
                         │                       │               │
                         ├───────────────────────┴───────────────┘
                         ▼
                    ┌──────────┐
                    │  RETURN  │
                    └──────────┘
```